# EUROPEAN PATENT APPLICATION

(11) **EP 4 520 488 A1**
(43) Date of publication of application: **12.03.2025**
(21) Application number: 24198694.2
(22) Date of filing: 05.09.2024
(51) Int. Cl.: B25J 9/16, B23K 9/09, G05B 19/423, G05B 19/401, G06F 3/04817

(54) **WELDING ROBOT WITH WORKPIECE SENSING**

(30) Priority: 08.09.2023 US 202363537273 P; 13.03.2024 US 202418603339
(71) Applicant: Lincoln Global, Inc., Santa Fe Springs, CA 90670 (US)
(72) Inventor: PEREZ GAVILAN TORRES, Camila Maria, Kitchener, Ontario, N2E 1X5 (CA); MITCHELL, Levi J., Windsor, 80550 (US)
(74) Representative: Hoyng Rokh Monegier B.V.

(57) **Abstract**

A welding system includes a robot having a movable arm. A robot controller is operatively connected to the robot. A welding torch is attached to the robot. A welding power supply is operatively connected to the torch. A teach pendant is in communication with the robot controller and includes a user interface application configured for programming a plurality of welding points of a welding operation performed by the robot, and is configured for programming a workpiece search for a physical location of a workpiece. The user interface application is further configured to receive input of a search start point that is offset from the physical location of the workpiece, and to display a prompt to calibrate the search. Upon receiving user input to calibrate the search, the physical location of the workpiece is automatically detected and a calibrated indication is displayed confirming that the search is currently calibrated.

## Description

### BACKGROUND OF THE INVENTION

### Field of the Invention

The present invention relates to robots, in particular collaborative robots (cobots), that are programmed to perform welding, additive manufacturing, plasma cutting, or laser operations, or other similar metal fabrication operations. More specifically, embodiments of the present invention relate to systems and methods for searching for and determining the physical location of workpieces and calibrating such searches.

### Description of Related Art

A program for a robot that performs an operation on a workpiece, such as a welding operation, can include a search for the physical location of the workpiece. Searches are included in such programs because the physical location of the workpiece might change from welding operation to welding operation. For example, during creation of the program, a first workpiece might be used at a first physical location to define various welding points. However, during actual welding on a second workpiece, the second workpiece may not be located at the same location as the first workpiece (e.g., it may be offset slightly from the location of the first workpiece). The welding program can include an initial search to determine the actual location of the current workpiece and adjust the programmed welding points accordingly. However, known applications for robot programming that include workpiece searches are often not very intuitive, and such applications can require a workpiece to be located precisely at an expected location in order to edit an existing program without reprogramming already-defined welding points. Accordingly, it would be desirable to provide a robot programming application that simplifies the use of workpiece location searches.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a welding system including a robot having a movable arm. A robot controller is operatively connected to the robot. A welding torch is attached to the movable arm of the robot and has a tool center point. A welding power supply is operatively connected to the welding torch to supply welding current to the welding torch. A teach pendant is in communication with at least one of the robot controller and the welding power supply. The teach pendant includes a user interface application configured for programming a plurality of welding points of a welding operation performed by the robot on a workpiece and is configured for programming a search vector for the robot controller to determine a physical location of the workpiece. The user interface application is further configured to receive input of a search start point for a workpiece search, and receive input of a search end point for the workpiece search. The user interface application automatically determines the search vector from the search start point and the search end point and displays a prompt to calibrate the workpiece search. Upon receiving user input to calibrate the workpiece search, the tool center point is automatically moved along the search vector until a point of contact with the workpiece is detected. The user interface application is configured to define, for the workpiece search, a new search vector between the search start point and the point of contact with the workpiece, and display a calibrated indication confirming that the workpiece search is currently calibrated.

In accordance with another aspect of the present invention, provided is a welding system including a robot having a movable arm. A robot controller is operatively connected to the robot. A welding torch is attached to the movable arm of the robot and has a tool center point. A welding power supply is operatively connected to the welding torch to supply welding current to the welding torch. A teach pendant is in communication with the robot controller. The teach pendant includes a user interface application configured for programming a plurality of welding points of a welding operation performed by the robot on a workpiece and is configured for programming a workpiece search for a physical location of the workpiece. The user interface application is further configured to receive input of a search start point for a workpiece search. The search start point is offset from the physical location of the workpiece. The user interface application is further configured to display a prompt to calibrate the workpiece search. Upon receiving user input to calibrate the workpiece search, the physical location of the workpiece is automatically detected. The user interface application is configured to display a calibrated indication confirming that the workpiece search is currently calibrated.

In accordance with another aspect of the present invention, provided is a welding system including a robot having a movable arm. A robot controller is operatively connected to the robot. A welding torch is attached to the movable arm of the robot and has a tool center point. A welding power supply is operatively connected to the welding torch to supply welding current to the welding torch. A teach pendant is in communication with at least one of the robot controller and the welding power supply. The teach pendant includes a user interface application configured for programming a plurality of welding points of a welding operation performed by the robot on a workpiece and is configured for programming a search vector for the robot controller to determine a physical location of the workpiece. The user interface application is further configured to receive input of a search start point for a workpiece search, and receive input of search end point for the workpiece search. The user interface application automatically determines the search vector from the search start and the search end point and displays a prompt to calibrate the workpiece search. Upon receiving user input to calibrate the workpiece search, the tool center point is automatically moved along the search vector until a point of contact with the workpiece is detected. The user interface application is configured to display a calibrated indication confirming that the workpiece search is currently calibrated based on detecting the point of contact with the workpiece. The user interface application is further configured to exit and subsequently reenter a welding program edit mode, and display a prompt to recalibrate the workpiece search based on reentering the welding program edit mode.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 shows a welding system having a collaborative robot;
FIG. 2 is a block diagram of the welding system;
FIG. 3 is a screen shot of an example user interface application;
FIG. 4 is a screen shot of an example user interface application;
FIG. 5 is a screen shot of an example user interface application;
FIG. 6 is a screen shot of an example user interface application;
FIG. 7 is a screen shot of an example user interface application;
FIG. 8 is a screen shot of an example user interface application;
FIG. 9 is a screen shot of an example user interface application;
FIG. 10 is a screen shot of an example user interface application;
FIG. 11 is a screen shot of an example user interface application;
FIG. 12 is a screen shot of an example user interface application;
FIG. 13 is a screen shot of an example user interface application;
FIG. 14 illustrates a workpiece search window;
FIG. 15 illustrates a workpiece offset;
FIG 16 is a flow diagram; and
FIG. 17 illustrates a block diagram of an example embodiment of a controller that can be used, for example, in the welding system of Figs. 1 and 2.

### DETAILED DESCRIPTION OF THE INVENTION

The present invention relates to the use of robots, such as conventional robot arms or collaborative robots (cobots) for welding, cutting, additive manufacturing, and similar operations, and to systems and methods for programming and calibrating a part or workpiece search using, for example, touch sensing (or other known forms of location sensing) during program build-up and program editing. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

Embodiments of the present invention are described herein in the context of a robot or cobot welding system. Example welding processes include gas metal arc welding (GMAW), flux-cored arc welding (FCAW), metal-cored arc welding (MCAW), gas tungsten arc welding (GTAW), and the like. In addition to welding operations, embodiments of the present invention can be used in plasma and laser cutting operations and welding-type processes, such as additive manufacturing and hardfacing processes. Thus, the term "welding" is to be interpreted to include such welding-type processes. Because such systems and processes are well known, they will not be described in detail herein.

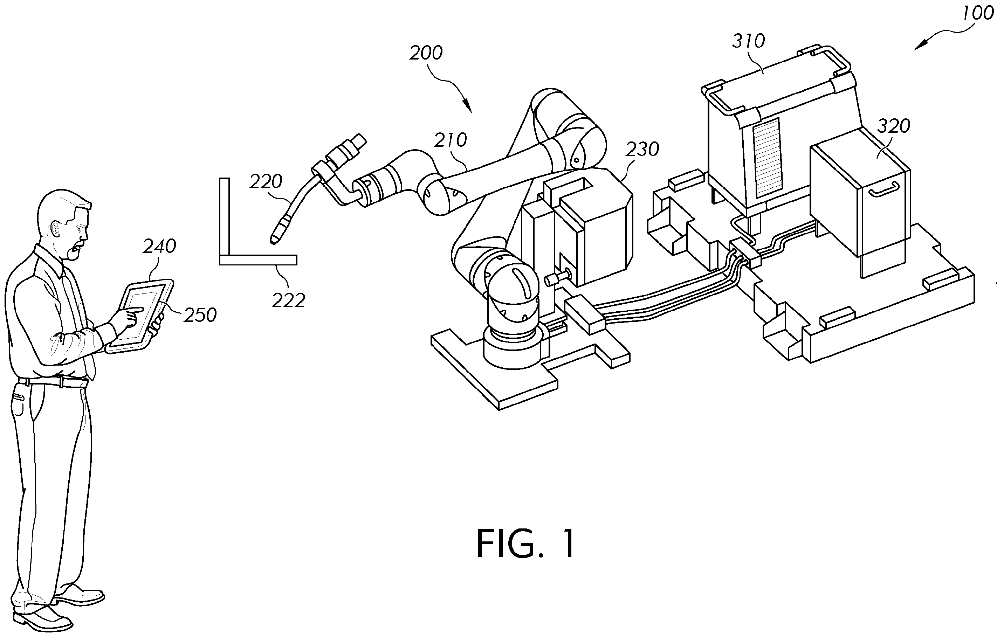

Referring to Fig. 1, the welding system 100 includes a robot having a movable arm 210 (e.g., a 6-axis robot arm). The robot could be a conventional industrial robot that is used in manufacturing, such as in the automotive industry. However, in certain embodiments, the robot could be a collaborative robot (cobot) 200. As is known in the art, a cobot is a type of robot that is similar to a conventional industrial robot, but which is designed with various safety features that allow for direct user interaction and contact with the cobot within a shared area. In this manner, the cobot and the user can work closely together and the user can manipulate or manually move the arm 210 of the cobot. The term "robot" as used herein includes both conventional industrial robots and cobots. For ease of explanation, embodiments of the present invention will be discussed in the context of cobot systems. However, it is to be appreciated that embodiments of the present invention could employ more conventional industrial robots that are not designed for direct user interaction and contact within a shared area, rather than cobots.

The welding system 100 further includes a welding power supply 310 (e.g., a chopper or inverter-based power supply), supporting arc welding, and a robot controller 320. In accordance with another embodiment, the power supply may be a cutting power supply supporting plasma cutting or laser cutting. The robot controller 320 is operatively connected to the cobot 200 to program and control its movements. The robot controller 320 may be operatively connected to the cobot 200 via, for example, robot cables (e.g., control and communications cables).

A welding torch 220 is attached to the movable arm 210 of the cobot, e.g., at a "wrist" portion of the cobot. The terms "torch" and "gun" are used herein interchangeably. The welding power supply 310 is operatively connected to the welding torch 220 to supply welding current to the welding torch during a welding operation. The welding power supply 310 may be operatively connected to the welding torch 220 via a welding cable for example. The welding torch 220 has a distal end that generates the welding arc. The distal end of the welding torch 220 is located at a tool center point (TCP), which is known by the robot controller and/or a cobot teach pendant 240 via a calibration.

The cobot 200 can include a servo-mechanism apparatus 230 configured to move the arm 210 of the cobot under the command of the robot controller 320 via a motion program (e.g., to support movement over multiple degrees of freedom). The welding system 100 can include a wire feeder (not shown) to feed welding wire to the welding torch 220.

The welding system 100 further includes a teach pendant 240 for programming the cobot 200. The teach pendant 240 can be used to program a plurality of welding points (e.g., weld start, end, and intermediate points) along linear and curved paths of a welding operation to be performed by the cobot on a workpiece(s) 222, and program workpiece searches and initiate search calibrations as discussed further below. The teach pendant 240 is operatively coupled to the robot controller 320 for bidirectional communications therewith. The teach pendant 240 may also be operatively coupled to the welding power supply 310 for bidirectional communications with the power supply. The teach pendant 240 can be hardwired or tethered to the robot controller 320 and/or welding power supply 310 or can communicate wirelessly (e.g., via wi-fi, Bluetooth, etc.) In certain embodiments, the teach pendant 240 can be a tablet device having a touchscreen user interface 250. The teach pendant 240 can have user interface application software through which the user interacts with the welding system 100 to program welding operations, such as torch movements during welding, the location of welding points, workpiece searches and search calibrations, and various welding parameters. The user interface application can be hosted on the teach pendant 240 or elsewhere in the welding system (e.g., on the robot controller 320). In certain embodiments, the user interface application can be a web application. In addition to programming cobot arm 210 and torch 220 movements, the teach pendant 240 can be used to program welding parameters such as welding voltage or current, wire feed speed, trim setting, etc. The teach pendant 240 can also be used to program cobot arm 210 and torch 220 movements specific to a welding operation, such as welding weave frequency and weave width, dwell time, weave pattern, torch travel speed, torch angle (e.g., work angle and travel angle), etc.

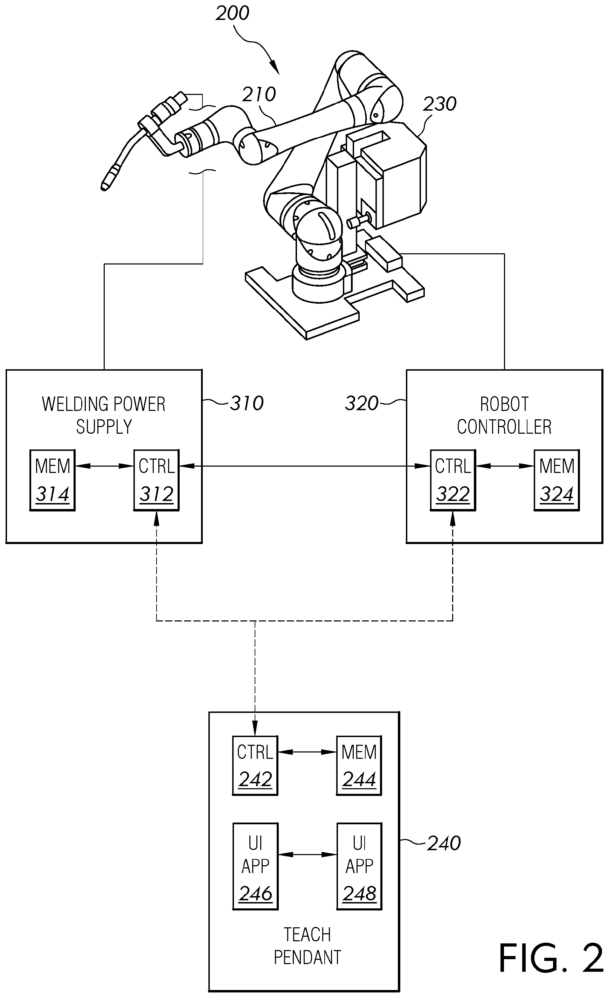

Figure 2 is a schematic block diagram of the welding system 100. In addition to power electronic circuitry (e.g., PWM inverters, choppers, etc.), the welding power supply 310 can include a processor or controller 312 and memory 314. The memory 314 of the welding power supply 310 can store programmed instructions that, when executed by the processor 312, causes the power supply to perform the functionality ascribed to it herein. Similarly, the robot controller 320 and teach pendant 240 can include respective processors 322, 242 and memory 324, 244 for executing their functionality. Communications among the welding power supply 310, robot controller 320 and the teach pendant 240 are shown schematically in Fig. 2 via solid and dashed lines between the processors. The teach pendant 240 can include one or more user interface applications 246, 248. Cobot teach pendants typically include a user interface application 246 or programming software that is provided by the cobot manufacturer. However, the manufacturer-provided programming software is typically not tailored to welding operations. Thus, in an example embodiment, the teach pendant 240 can include a second user interface application 248 configured for programming both a plurality of welding points and a plurality of welding parameters of a welding operation performed by the cobot 200, in addition to torch movements and workpiece searches and calibrating such searches. The user interface applications 246, 248 can share information with each other and send data to and receive data from the robot controller 320 and/or the welding power supply 310. In an example embodiment, the second user interface application 248 can translate data into instructions or a computer language of the robot controller. In another example embodiment, the manufacturer-provided user interface application 246 can be excluded, and only the second user interface application 248 be employed in the welding system 100.

Teaching or programming robot workpiece searches, which allow the user interface application and/or the robot controller to determine the actual physical location of a workpiece in 3D space, is difficult due to the amount of precision required for such searches to work as expected. For example, when editing a program's welding points (e.g., adding new welding points or moving existing welding points), search points must match the part or workpiece's location exactly for program edits to have the expected outcome when running the program. Conventional robots and cobots that provide a force or wire sense feature to determine actual workpiece locations provide methods to "master" or "zero" workpiece searches.

The present search calibration feature discussed herein is simpler and more intuitive than existing ones and provides a more user-friendly or intuitive way to teach search points, a visual indicator on the program to indicate whether a search has been calibrated to the current part location, and a quick mechanism to recalibrate searches and update program welding points when editing a program with a shifted part (shifted relative to the original part used to teach the base program).

The present workpiece search calibration feature, implemented in the user interface application on the teach pendant, simplifies the use of searches in welding programs in two ways: first by requiring less precision on the search points when they are first taught. Immediately after teaching search points (e.g., a search start point away from the part and a search end point on or near the part), a calibration procedure is run. A workpiece search is executed along a search vector defined by the taught search points, such as by the robot moving the tool center point along the search vector until a point of contact with the workpiece is detected, and the point of contact with the workpiece is saved, ensuring that the search points are correct when continuing to build the program. The calibration procedure can define, for the programmed workpiece search, a new search vector extending between the search start point and the point of contact with the workpiece (e.g., the taught or input search end point can be replaced with the detected point of contact with the workpiece to define the new search vector for the workpiece search). Thus, the taught search end point does not have to precisely match the actual physical location of the workpiece (e.g., the search end point and the point of contact with the workpiece need not be not co-located). As long as the taught search end point is close to the workpiece, the calibration will detect the actual physical location of the workpiece, and any subsequently taught welding points impacted by the workpiece search will have a zero offset. Secondly, the search calibration feature simplifies later editing of the program by allowing a user to recalibrate searches at any point during a program edit (recalibrating a search will update all programed welding points that are affected by that search's offset), and by automatically displaying recalibration prompts to users that attempt edit operations that would require calibrated searches. For example, it is common to create a welding program that includes workpiece searches using a workpiece located at an initial location. The searches and taught welding points are programmed with the workpiece at that initial location. Later, a user may wish to edit the program using the same or a similar workpiece. However, the user may not precisely place the same or similar workpiece at the exact initial location. In this case, the initially taught welding points will not match up with or be offset from any subsequently added welding points. Thus, the workpiece search can be recalibrated to the new workpiece location (e.g., by the robot moving the tool center point along the search vector until the new workpiece location is determined), and the user interface application can automatically adjust the respective programmed locations of the plurality of initially taught welding points based on recalibrating the workpiece search prior to editing the program. The positions of the initially taught welding points can be adjusted by the amount of offset between the new, current location of the workpiece and the initial location of the workpiece. In certain embodiments, the user interface application includes a welding program edit mode for creating and editing a welding program, and the user interface application is configured to automatically display a prompt to recalibrate the workpiece search upon reentering the welding program edit mode. When reentering the welding program edit mode, there is a possibility that the current location of the workpiece does not match the initial location of the workpiece when the program was created, and the prompt to recalibrate the workpiece search will alert the user that recalibration might be necessary. The user can skip the recalibration if it is determined to be unnecessary.

Programmed workpiece searches that have already been calibrated during the current program edit session are tagged by the user interface application with a visual status indicator or calibrated indication as a way clearly show to the user that a particular search is currently calibrated. That is, the user interface application displays the calibrated indication, for example near a search block in the welding program, to confirm to the user that that workpiece search is currently calibrated. It is to be appreciated that a welding program can contain multiple workpiece searches (e.g., respectively corresponding to different positions or locations on a workpiece) with various welding points associated with each search, and each search can be individually calibrated and recalibrated. Each search can have its own calibrated indication to convey to the user whether or not that search has been calibrated.

The present workpiece search calibration feature is a feature in the user interface application on the teach pendant. There are two different situations in which search calibration is used: during a program build-up or welding program creation, when a search is originally taught, and subsequently when editing a program with one or more searches already defined in it.

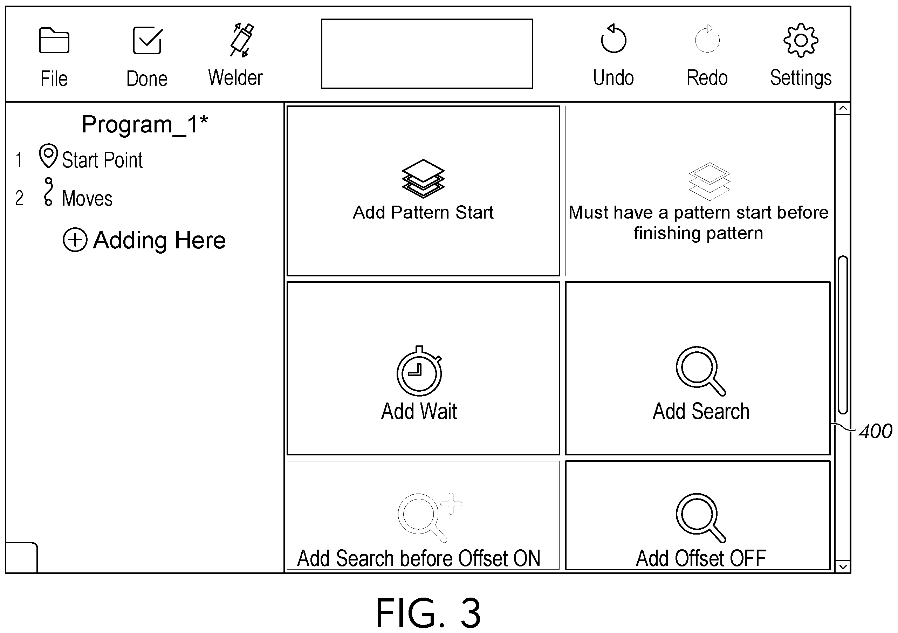

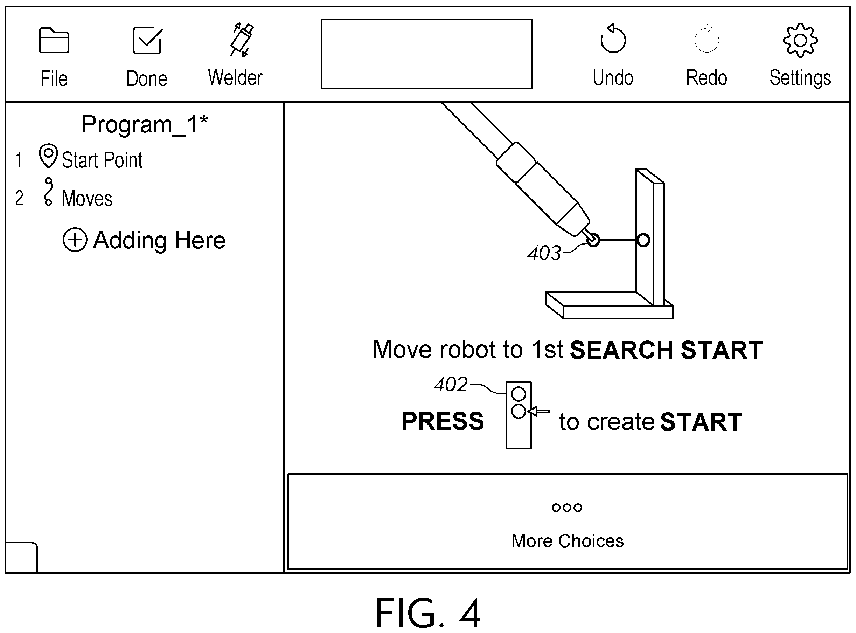

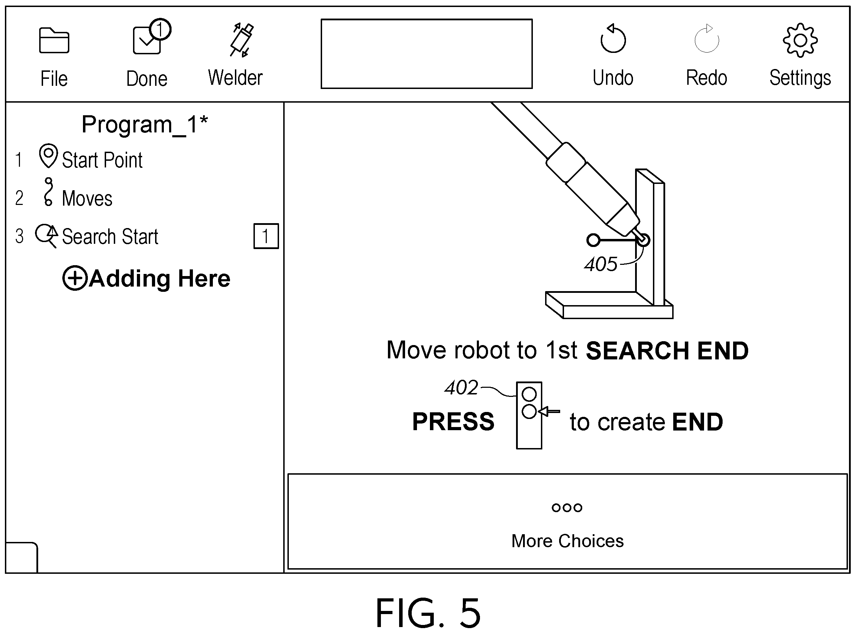

During program build-up, a user must first teach a workpiece search as illustrated in Figs. 3-5. The user interface application is configured for programming the workpiece search for the actual physical location of the workpiece or part, an in particular a search vector for the robot controller to determine the actual physical location of a workpiece or part. In Fig. 3, the user activates, e.g., touches, the Add Search selector button 400 to program a first search. A workpiece search can be defined by teaching or inputting two points with the cobot: a search start point 403 and a search end point 405. Figure 4 is a screen shot of the user interface application on the teach pendant instructing the user to enter the search start point 403 after the Add Search selector button 400 was activated, and Fig. 5 is a screen shot of the user interface application instructing the user to enter the search end point 405. The welding torch mounted to the cobot arm has a distal end that generates the welding arc. The distal end of the welding torch is located at a tool center point (TCP), which is known by the robot controller and/or a cobot teach pendant 240 (i.e., the TCP is previously calibrated). When programming a cobot, the user will manually move the cobot arm to position the TCP at the search start point 403, which is offset from the physical location of the workpiece, and then to the search end point 405 to define the search. The search end point 405 can be located on or close to the workpiece. The welding torch or the cobot arm can include a button or other suitable input device to enter or input the start and end points for the search. The user inter interface application can include an informational pictogram 402 that instructs the user to use the button on the welding torch or cobot arm to input the start and end points for the search, as shown in Figs. 4 and 5. These two points describe the search vector along which the cobot will search for the workpiece or part. Rather than manually moving the cobot arm to position the TCP at the search start and end points, such as when programming a workpiece search for a conventional robot, the user can use the teach pendant to jog the robot arm and TCP into the search start and end positions, which can be entered via selector buttons on the user interface application.

The user interface application automatically determines the search vector from the search start point 403 and the search end point 405 (e.g., the search vector begins at the search start point and extends through the search end point). The workpiece search itself can be a standard wire sense search, in which voltage is run through the welding wire until a short circuit with the workpiece is detected, indicating that the wire has made contact with the workpiece. The point of contact is recognized by the robot controller and/or the user interface application as the location of the workpiece. In other embodiments, the torch or robot arm can include a force sensor or accelerometer to determine the point of contact with the workpiece. In still other embodiments, input of the search end point 405 may not be necessary if the robot is capable of determining the location of the workpiece at a distance, such as from the search start point 403, to establish the search vector. For example, the robot could include a laser sensor or vision system or a magnetic sensor to determine the location of the workpiece without needing to make physical contact with the workpiece.

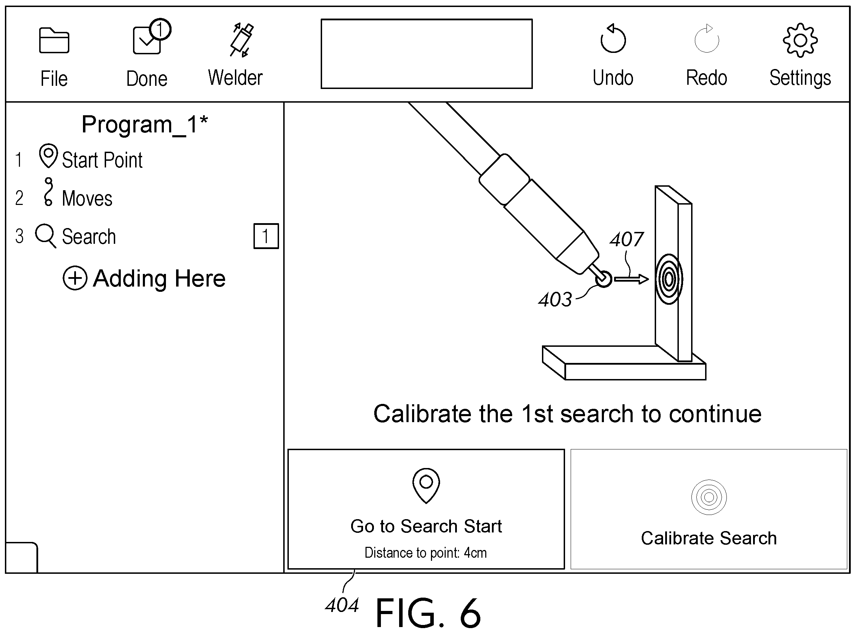

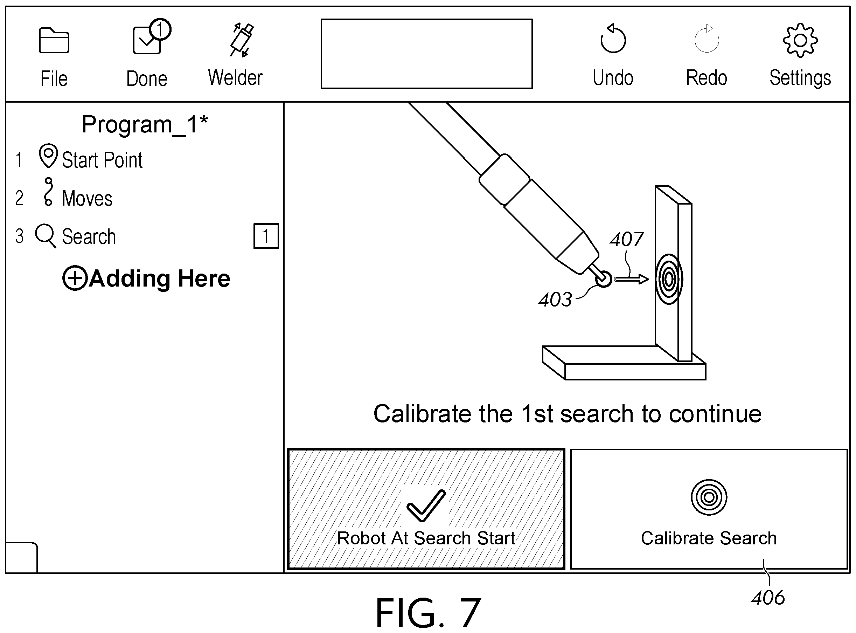

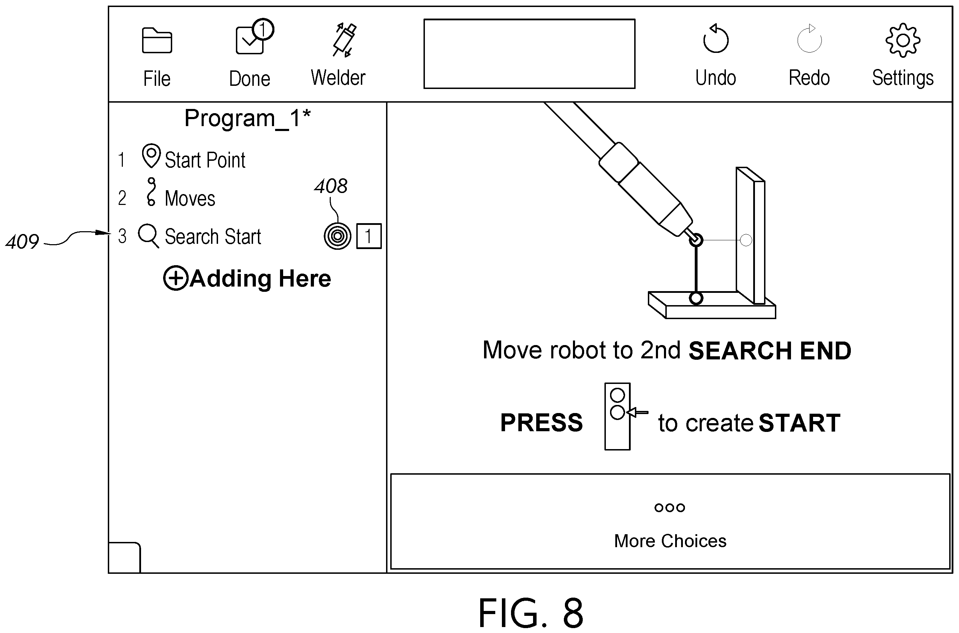

Once the search vector is defined, such as after the start point 403 and the search end point 405 are input by the user, the user interface application displays a prompt to the user to calibrate the workpiece search, as shown in Fig. 6. The prompt can include a schematic representation of the search vector 407. To calibrate the search, the user is instructed to move the cobot or TCP back to the search start point 403. This can be achieved by activating a "Go To Search Start" selector button 404, which will cause the user interface application to instruct the robot controller to move the cobot arm and TCP back to the search start point 403. Once the TCP is at the search start point 403, a "Calibrate Search" selector button 406 (Fig. 7) becomes available. The user activates the Calibrate Search selector button 406 to complete the search calibration. On doing so, the cobot performs a search along the search vector 407, and the contact point with the workpiece that is sensed by the cobot, welding power supply, etc. is stored as the new search end point. For example, upon receiving user input to calibrate the workpiece search, the user interface application causes the cobot to automatically move the TCP along the search vector 407 until the point of contact with the workpiece is detected. The user interface application can then replace the search end point with the point of contact with the workpiece to define a new search vector for the workpiece search. This ensures that the new search end point (i.e., the point of contact with the workpiece) is precise and that when a search offset is added for that search, the offset will be zero. The search offset affects the locations of the programmed welding points associated with the corresponding workpiece search. Welding points taught or programmed after a search offset block will be where they are taught when the program is run for this part. At this point, the calibration is complete and a visual calibrated indication 408 (Fig. 8) is added to the search block 409 to show its calibrated status.

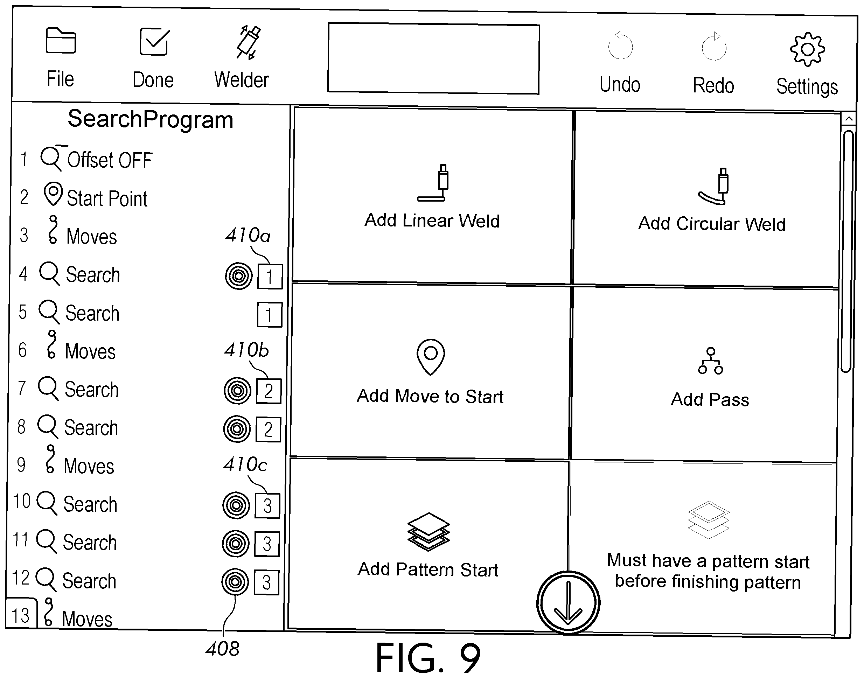

The example workpiece search programming and calibration procedure discussed above with respect to Figs. 3-8 concerns a one dimensional (1D) search for simplicity, but the user interface application allows for 1D, 2D and 3D searches to be taught with this same procedure. In multi-dimensional searches, each component of the search is taught using the same procedure as shown and discussed for a 1D search. Figures 3-7 concern a workpiece search in the horizontal direction. The screen shot in Fig. 8 shows the user interface application ready for programming a further workpiece search in the vertical direction (e.g. to extend the search from a 1D search to a 2D search). Referring to Fig. 9, a group number 410a, 410b, 410c distinguishes different searches from each other. A 1D search can be displayed as a single block with a unique search group ID number, a 2D search can be displayed as two blocks each with the same group ID number, and a 3D search can be displayed as three blocks each with the same group ID number. In Fig. 9, group ID numbers one 410a and two 410b are 2D searches because two group ID numbers are associated with the searches, while group ID number three 410c is a 3D search because it has three group ID numbers. A 1D search would have a single group ID number, as shown in Fig. 8. Each of the workpiece searches in Fig. 9 have been calibrated, as shown by the calibrated indication 408 adjacent to the group ID numbers 41 0a, 410b, 410c.

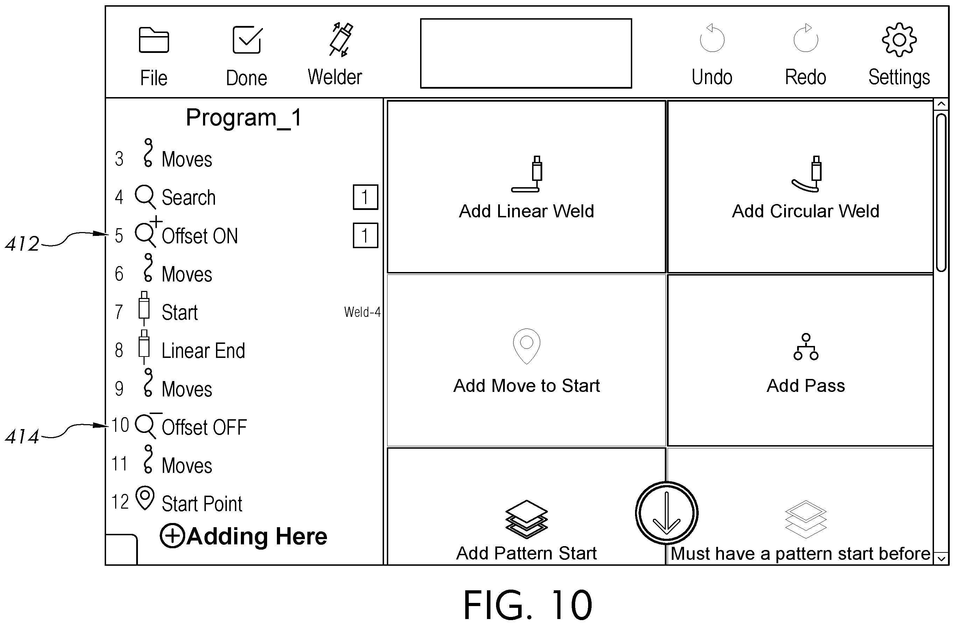

With reference to Fig. 10, after a workpiece search is added to a welding program and calibrated, search offset ON 412 block and a search offset OFF block 414 can be added to the program. The welding points are added between the search offset ON 412 and search offset OFF 414 blocks. When the welding program is run and the workpiece search determines that the current workpiece location is offset from the initial location when the program was created, the welding points between the offset ON 412 block and the offset OFF block 414 will be adjusted accordingly. For example, if the current workpiece location is 5mm to the right of the initial location of the workpiece when the program was created, all of the welding points between the offset ON 412 block and the offset OFF block 414 will be adjusted 5mm to the right so that they are made at the correct position on the current workpiece.

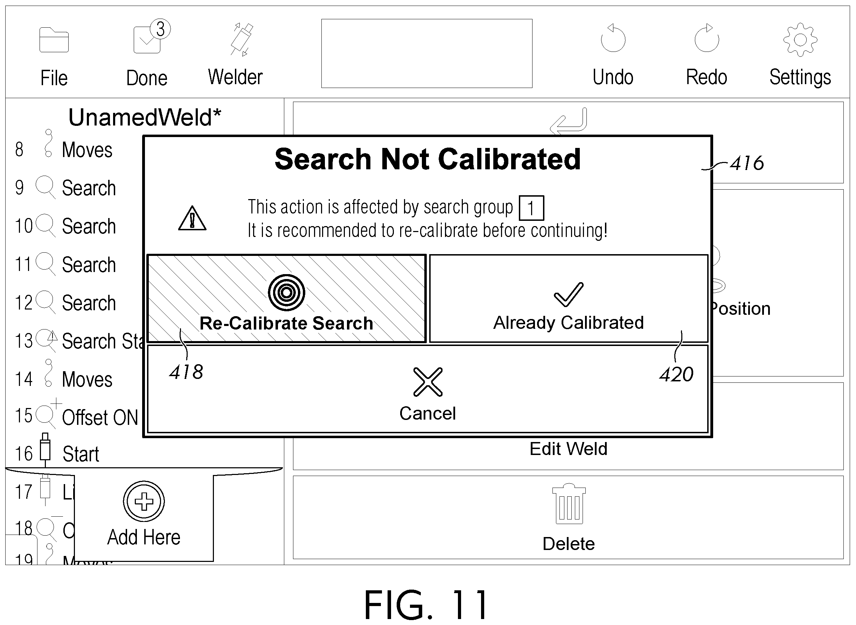

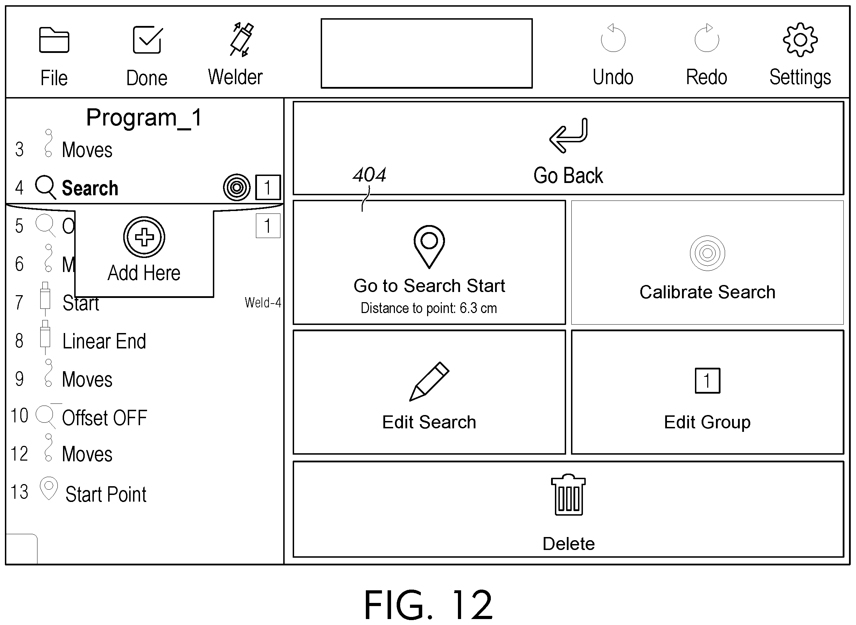

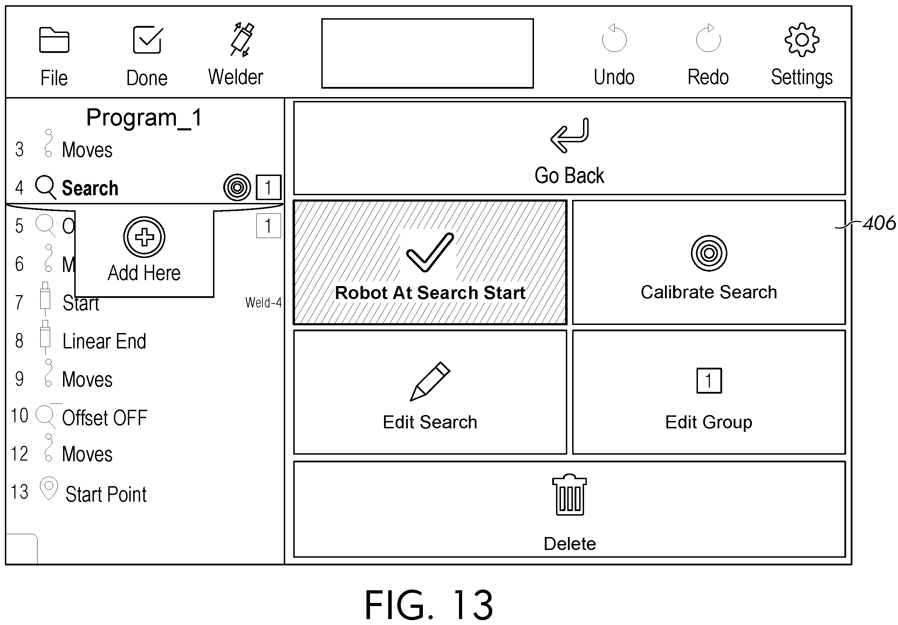

The user interface application can have a welding program edit mode or programming mode in which the welding program is built-up (e.g., workpiece searches defined and welding points added) and also a run mode in which the built-up welding program is used to perform welds on a workpiece. Upon reentering the welding program edit/programming mode to edit an existing welding program after the original build-up phase, if a user attempts to edit or add a weld point that is affected by a search group's offset blocks 412, 414 when the search has not been calibrated in the active edit session, a modal (modal window) 416 will be displayed to the user suggesting that they recalibrate the search (see Fig. 11). On accepting the suggestion by activating a recalibrate search selector button 418, the user will be transported to search edit screens (Figs. 12 and 13) where he can move the cobot to the search start point by activating the Go to Search Start selector button 404 and then perform the calibration by activating the Calibrate Search selector button 406. Upon receiving user input to calibrate the search, the cobot will move the TCP along the search vector until the point of contact with the workpiece is detected, to determine the physical location of the current workpiece. Calibrating a search block will update the position of the welding points affected by the search group offset: this includes all points between an offset ON block for the search group and an offset OFF block, as well as all subsequent searches to the calibrated search that are within the same search group. This ensures that the program is again in a "zero offset" state for that search, which is necessary for edits to be predictable and expected. Since the calibrated state is lost when alternating between program run and edit modes, the modal 416 (Fig. 11) allows an out to the calibration procedure (e.g., allows the user to skip the calibration procedure), in case the user has moved between run and edit modes without moving a previously calibrated workpiece. If the user knows that the workpiece is in the correct location (i.e., is not offset from the initial location when the search was taught), pressing the "Already Calibrated" selector button 420 will force the search block into a calibrated state without going through an actual calibration procedure, and the user interface application will return to program editing.

While in the welding program edit/programming mode, a user may select a search by, for example, touching the search block and may calibrate the search at any time they choose if they know it is required.

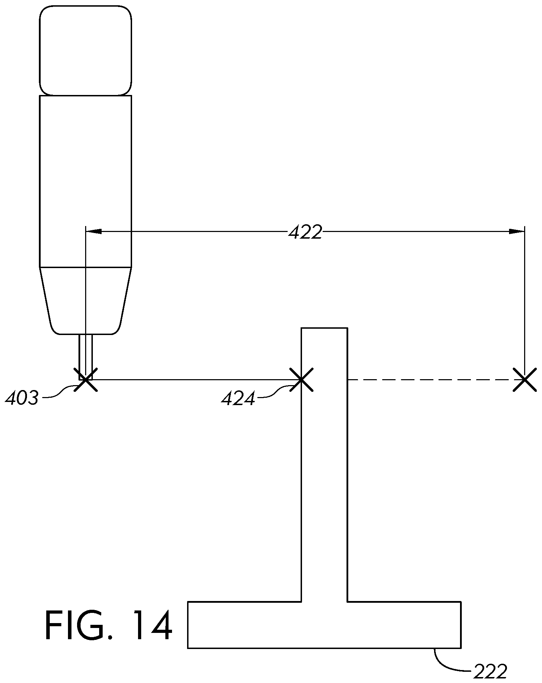

Once a workpiece search has been calibrated and a search vector established for the search, a search window 422 can be defined for the search. The search window 422 can be a linear search window extending along the search vector but can be longer than the distance between the search start point 403 and the search end point or point of contact 424 with the workpiece when the search was created/programmed. This is shown schematically in Fig. 14. In an example embodiment, the length of the search window 422 is twice the distance between the search start point 403 and the point of contact 424 with the workpiece when the search was created/programmed. The length of the search window 422 could be longer or shorter than twice the distance between the search start point 403 and the point of contact with the workpiece 424 when the search was created/programmed. The purpose of defining a search window that extends along the search vector but is longer than the distance between the search start point 403 and the search end point is so that the physical location of a subsequent workpiece that is offset from the location of the original workpiece can be found within a reasonable search window.

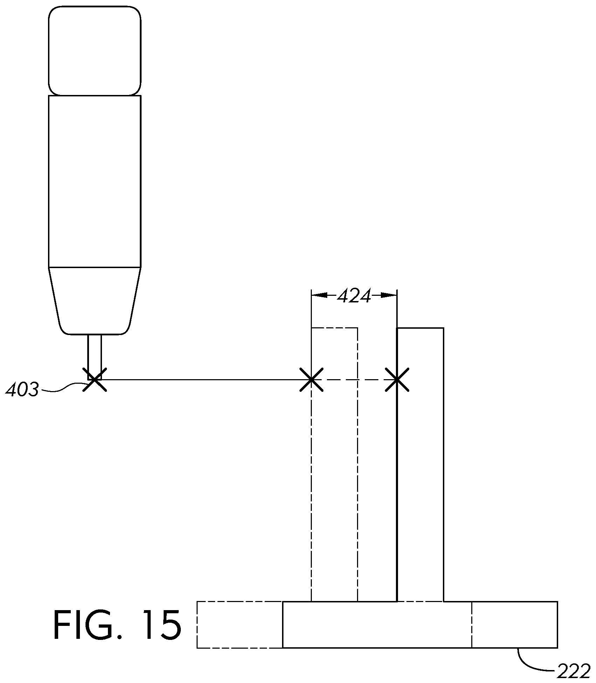

Figure 15 illustrates how a workpiece 222 to be welded can be offset 424 from an original location when the welding program was built-up. The offset 424 will be detected during a search calibration or during a search operation when welding. When editing a welding program, the offset 424 can be used to automatically adjust the positions of the existing weld points affected by the corresponding workpiece search so that the offset is zero. When running the welding program, the offset 424 can be used to adjust the positions of weld points affected by the corresponding workpiece search.

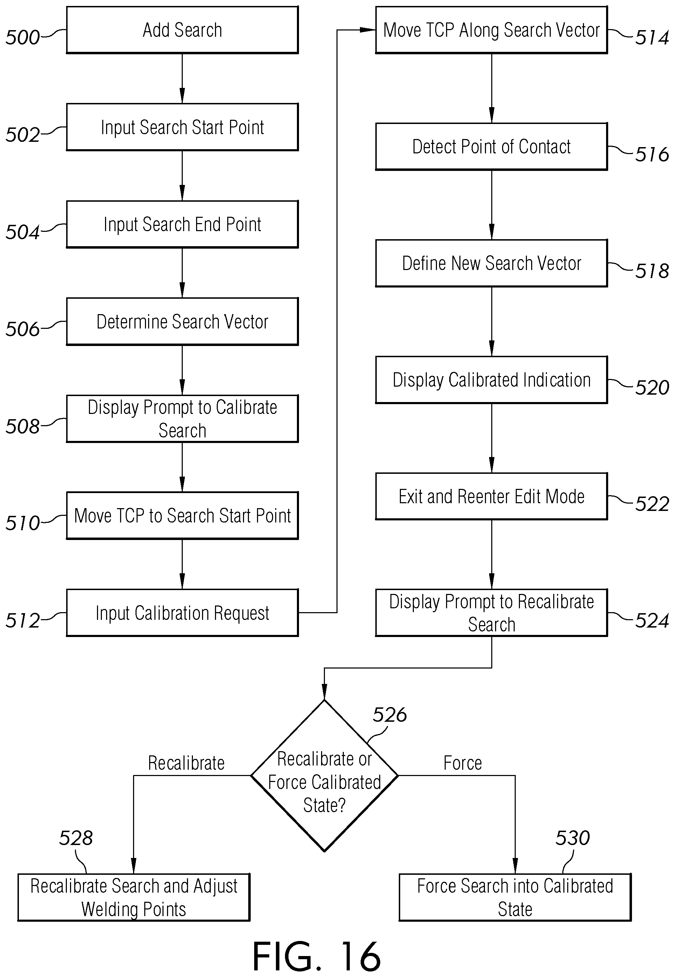

Figure 16 is a flow diagram for an example workpiece search programming and calibration method executed by the user interface application. In step 500, a new search can be added, such as by activating the Add Search Selector button 400 (Fig. 3). The user interface application can then receive user inputs of the search start point (step 502), which is offset from the physical location of the workpiece, and the search end point (504), which is closer to the workpiece or on the workpiece. The user interface application automatically determines a search vector from the search start and end points (step 506). The user interface application can then automatically display a prompt to calibrate the workpiece search (step 508). The robot arm moves the TCP back to the search start point (step 510), at which point the user can input a command to calibrate the search (step 512). Upon receiving the user input to calibrate the search, the physical location of the workpiece is automatically detected, such as by moving the TCP along the search vector (step 514) until a point of contact with the workpiece is detected (step 516). A new search vector between the search start point and the point of contact with the workpiece is then defined (step 518) and a calibrated indication is displayed confirming that the workpiece search is currently calibrated (step 520). A user can exit and subsequently reenter the welding program edit mode (step 522). When this occurs, the user interface application will display a prompt to recalibrate the workpiece search based on reentering the welding program edit mode (step 524). The user can be provided with a choice to either recalibrate the search or force the search into a calibrated state (e.g., by inputting that the search is already calibrated) (step 526). If the user elects to recalibrate the search, the calibration procedure will be run and the locations of any programmed welding points impacted by the search will be automatically adjusted (step 528). If the user elects to force the search into a calibrated state, the calibration procedure will be skipped but the calibrated indication will be displayed near the search block, and program editing can continue (step 530).

The above-discussed workpiece search programming and calibration procedure, along with the calibrated indication and the hints to the user to suggest calibration or recalibration, simplifies the process of teaching and using searches in robot welding programs when compared to existing solutions. Moreover, running the above-discussed calibration procedure on an already established welding program will adjust affected welding points to establish an updated welding program.

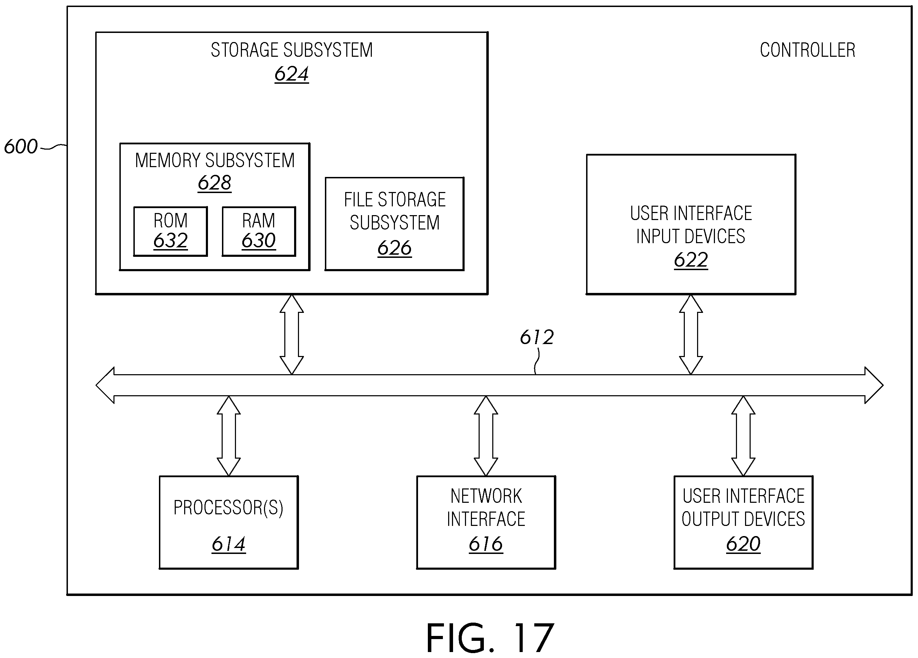

Figure 17 illustrates a block diagram of an example embodiment of a controller 600 that can be used, for example, in the welding system 100 shown in Figs. 1 and 2. For example, the controller 600 may be used in the robot controller 320 and/or as a controller in the welding power supply 310 and/or the teach pendant 240. Referring to Fig. 17, the controller 600 includes at least one processor 614 (e.g., a microprocessor, a central processing unit, a graphics processing unit) which communicates with a number of peripheral devices via bus subsystem 612. These peripheral devices may include a storage subsystem 624, including, for example, a memory subsystem 628 and a file storage subsystem 626, user interface input devices 622, user interface output devices 620, and a network interface subsystem 616. The input and output devices allow user interaction with the controller 600. Network interface subsystem 616 provides an interface to outside networks and is coupled to corresponding interface devices in other devices.

User interface input devices 622 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 600 or onto a communication network.

User interface output devices 620 may include a display subsystem, a printer, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 600 to the user or to another machine or computer system.

Storage subsystem 624 stores programming and data constructs that provide some or all of the functionality described herein. For example, computer-executable instructions and data are generally executed by processor 614 alone or in combination with other processors. Memory 628 used in the storage subsystem 624 can include a number of memories including a main random access memory (RAM) 630 for storage of instructions and data during program execution and a read only memory (ROM) 632 in which fixed instructions are stored. A file storage subsystem 626 can provide persistent storage for program and data files, and may include a hard disk drive, a solid state drive, a floppy disk drive along with associated removable media, a CD-ROM drive, an optical drive, or removable media cartridges. The computer-executable instructions and data implementing the functionality of certain embodiments may be stored by file storage subsystem 626 in the storage subsystem 624, or in other machines accessible by the processor(s) 614.

Bus subsystem 612 provides a mechanism for letting the various components and subsystems of the controller 600 communicate with each other as intended. Although bus subsystem 612 is shown schematically as a single bus, alternative embodiments of the bus subsystem may use multiple buses.

The controller 600 can be of varying types. Due to the ever-changing nature of computing devices and networks, the description of the controller 600 depicted in FIG. 17 is intended only as a specific example for purposes of illustrating some embodiments. Many other configurations of a controller are possible, having more or fewer components than the controller 600 depicted in Fig. 17.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

The below clauses disclose welding systems as part of this application.
[clause 1.] A welding system, comprising:
   a robot having a movable arm;
   a robot controller operatively connected to the robot;
   a welding torch attached to the movable arm of the robot and having a tool center point;
   a welding power supply operatively connected to the welding torch to supply welding current to the welding torch; and
   a teach pendant in communication with at least one of the robot controller and the welding power supply, wherein the teach pendant includes a user interface application configured for programming a plurality of welding points of a welding operation performed by the robot on a workpiece and configured for programming a search vector for the robot controller to determine a physical location of the workpiece, and wherein the user interface application is configured to:
      receive input of a search start point for a workpiece search,
      receive input of a search end point for the workpiece search,
      automatically determine the search vector from the search start point and the search end point,
      display a prompt to calibrate the workpiece search,
      upon receiving user input to calibrate the workpiece search, automatically move the tool center point along the search vector until a point of contact with the workpiece is detected,
      define, for the workpiece search, a new search vector between the search start point and the point of contact with the workpiece, and
      display a calibrated indication confirming that the workpiece search is currently calibrated.
[clause 2.] The welding system of clause 1, wherein the user interface application is further configured to replace the search end point with the point of contact to define the new search vector for the workpiece search.
[clause 3.] The welding system of clause 1, wherein the robot is a collaborative robot (cobot).
[clause 4.] The welding system of clause 1, wherein the search end point and the point of contact with the workpiece are not co-located.
[clause 5.] The welding system of clause 1, wherein the user interface application is further configured to define a linear search window along the search vector, and wherein the linear search window is longer than a distance between the search start point and the point of contact with the workpiece.
[clause 6.] The welding system of clause 1, wherein the point of contact with the workpiece is detected by detecting a short circuit between a welding wire and the workpiece during movement of the tool center point along the search vector.
[clause 7.] The welding system of clause 1, wherein the user interface application includes a welding program edit mode, and the user interface application is configured to automatically display a prompt to recalibrate the workpiece search upon reentering the welding program edit mode.
[clause 8.] The welding system of clause 7, wherein the user interface application is further configured to automatically adjust respective programmed locations of the plurality of welding points based on recalibrating the workpiece search.
[clause 9.] A welding system, comprising:
   a robot having a movable arm;
   a robot controller operatively connected to the robot;
   a welding torch attached to the movable arm of the robot and having a tool center point;
   a welding power supply operatively connected to the welding torch to supply welding current to the welding torch; and
   a teach pendant in communication with the robot controller, wherein the teach pendant includes a user interface application configured for programming a plurality of welding points of a welding operation performed by the robot on a workpiece and configured for programming a workpiece search for a physical location of the workpiece, and wherein the user interface application is configured to:
      receive input of a search start point for the workpiece search, wherein the search start point is offset from the physical location of the workpiece,
      display a prompt to calibrate the workpiece search,
      upon receiving user input to calibrate the workpiece search, automatically detect the physical location of the workpiece, and
      display a calibrated indication confirming that the workpiece search is currently calibrated.
[clause 10.] The welding system of clause 9, wherein the robot is a collaborative robot (cobot).
[clause 11.] The welding system of clause 9, wherein the user interface application is further configured to receive input of a search end point for the workpiece search and automatically determine a search vector from the search start point and the search end point, wherein the search end point and the physical location of the workpiece are not co-located.
[clause 12.] The welding system of clause 11, wherein the user interface application is further configured to define a linear search window along the search vector, and wherein the linear search window is longer than a distance between the search start point and the search end point.
[clause 13.] The welding system of clause 12, wherein the physical location of the workpiece is detected by detecting a short circuit between a welding wire and the workpiece during movement of the tool center point along the search vector.
[clause 14.] The welding system of clause 9, wherein the user interface application includes a welding program edit mode, and the user interface application is configured to automatically display a prompt to recalibrate the workpiece search upon reentering the welding program edit mode.
[clause 15.] The welding system of clause 14, wherein the user interface application is further configured to automatically adjust respective programmed locations of the plurality of welding points based on recalibrating the workpiece search.
[clause 16.] A welding system, comprising:
   a robot having a movable arm;
   a robot controller operatively connected to the robot;
   a welding torch attached to the movable arm of the robot and having a tool center point;
   a welding power supply operatively connected to the welding torch to supply welding current to the welding torch; and
   a teach pendant in communication with at least one of the robot controller and the welding power supply, wherein the teach pendant includes a user interface application configured for programming a plurality of welding points of a welding operation performed by the robot on a workpiece and configured for programming a search vector for the robot controller to determine a physical location of the workpiece, and wherein the user interface application is configured to:
      receive input of search start point for a workpiece search,
      receive input of search end point for the workpiece search,
      automatically determine the search vector from the search start point and the search end point,
      display a prompt to calibrate the workpiece search,
      upon receiving user input to calibrate the workpiece search, automatically move the tool center point along the search vector until a point of contact with the workpiece is detected,
      display a calibrated indication confirming that the workpiece search is currently calibrated based on detecting the point of contact with the workpiece,
      exit and subsequently reenter a welding program edit mode, and
      display a prompt to recalibrate the workpiece search based on reentering the welding program edit mode.
[clause 17.] The welding system of clause 16, wherein the robot is a collaborative robot (cobot).
[clause 18.] The welding system of clause 16, wherein the search end point and the point of contact with the workpiece are not co-located.
[clause 19.] The welding system of clause 16, wherein the user interface application is further configured to define a linear search window along the search vector, and wherein the linear search window is longer than a distance between the search start point and the point of contact with the workpiece.
[clause 20.] The welding system of clause 16, wherein the point of contact with the workpiece is detected by detecting a short circuit between a welding wire and the workpiece during movement of the tool center point along the search vector.
[clause 21.] The welding system of clause 16, wherein the user interface application is further configured to automatically adjust respective programmed locations of the plurality of welding points based on recalibrating the workpiece search.

## Claims

1. A welding system, comprising:
a robot having a movable arm;
a robot controller operatively connected to the robot;
a welding torch attached to the movable arm of the robot and having a tool center point;
a welding power supply operatively connected to the welding torch to supply welding current to the welding torch; and
a teach pendant in communication with at least one of the robot controller and the welding power supply, wherein the teach pendant includes a user interface application configured for programming a plurality of welding points of a welding operation performed by the robot on a workpiece and configured for programming a search vector for the robot controller to determine a physical location of the workpiece, and wherein the user interface application is configured to:
receive input of a search start point for a workpiece search,
receive input of a search end point for the workpiece search,
automatically determine the search vector from the search start point and the search end point,
display a prompt to calibrate the workpiece search,
upon receiving user input to calibrate the workpiece search, automatically move the tool center point along the search vector until a point of contact with the workpiece is detected, and
display a calibrated indication confirming that the workpiece search is currently calibrated.

2. The welding system of claim 1, wherein the user interface application is configured to define, for the workpiece search, a new search vector between the search start point and the point of contact with the workpiece.

3. The welding system of claim 2, wherein the user interface application includes a welding program edit mode, and the user interface application is configured to automatically display a prompt to recalibrate the workpiece search upon reentering the welding program edit mode.

4. The welding system of claim 1, wherein the user interface application is configured to:
display the calibrated indication confirming that the workpiece search is currently calibrated based on detecting the point of contact with the workpiece
exit and subsequently reenter a welding program edit mode, and
display a prompt to recalibrate the workpiece search based on reentering the welding program edit mode.

5. The welding system of any of the previous claims, wherein the user interface application is further configured to replace the search end point with the point of contact to define the new search vector for the workpiece search.

6. The welding system of any of the previous claims, wherein the robot is a collaborative robot (cobot).

7. The welding system of any of the previous claims, wherein the search end point and the point of contact with the workpiece are not co-located.

8. The welding system of any of the previous claims, wherein the user interface application is further configured to define a linear search window along the search vector, and wherein the linear search window is longer than a distance between the search start point and the point of contact with the workpiece.

9. The welding system of any of the previous claims, wherein the point of contact with the workpiece is detected by detecting a short circuit between a welding wire and the workpiece during movement of the tool center point along the search vector.

10. The welding system of claim 9, wherein the user interface application is further configured to automatically adjust respective programmed locations of the plurality of welding points based on recalibrating the workpiece search.

11. A welding system, comprising:
a robot having a movable arm;
a robot controller operatively connected to the robot;
a welding torch attached to the movable arm of the robot and having a tool center point;
a welding power supply operatively connected to the welding torch to supply welding current to the welding torch; and
a teach pendant in communication with the robot controller, wherein the teach pendant includes a user interface application configured for programming a plurality of welding points of a welding operation performed by the robot on a workpiece and configured for programming a workpiece search for a physical location of the workpiece, and wherein the user interface application is configured to:
receive input of a search start point for the workpiece search, wherein the search start point is offset from the physical location of the workpiece,
display a prompt to calibrate the workpiece search,
upon receiving user input to calibrate the workpiece search, automatically detect the physical location of the workpiece, and
display a calibrated indication confirming that the workpiece search is currently calibrated.

12. The welding system of claim 11, wherein the robot is a collaborative robot (cobot).

13. The welding system of claim 11 or 12, wherein the user interface application is further configured to receive input of a search end point for the workpiece search and automatically determine a search vector from the search start point and the search end point, wherein the search end point and the physical location of the workpiece are not co-located,
wherein preferably the user interface application is further configured to define a linear search window along the search vector, and wherein the linear search window is longer than a distance between the search start point and the search end point.

14. The welding system of any of the claims 13-13, wherein the physical location of the workpiece is detected by detecting a short circuit between a welding wire and the workpiece during movement of the tool center point along the search vector.

15. The welding system of any of the claims 11-14, wherein the user interface application includes a welding program edit mode, and the user interface application is configured to automatically display a prompt to recalibrate the workpiece search upon reentering the welding program edit mode,
wherein preferably the user interface application is further configured to automatically adjust respective programmed locations of the plurality of welding points based on recalibrating the workpiece search.
